# EUROPÄISCHE PATENTSCHRIFT

(11) **EP 0 483 644 B1**
(45) Veröffentlichungstag und Bekanntmachung des Hinweises auf die Patenterteilung: **31.05.1995**
(21) Anmeldenummer: 91117987.7
(22) Anmeldetag: 22.10.1991
(51) Int. Cl.: A47J 43/12, F25D 3/06, F25D 3/12, A01J 13/00

(54) **Vorrichtung zur gleichzeitigen Erzeugung und Abgabe von Schlagsahne oder dergleichen**
Device for making and at the same time distributing whipped cream or similar products
Dispositif pour faire et distribuer à la fois de la crème fouettée ou un produit similaire

(30) Priorität: 31.10.1990 IT 2204590 U
(43) Veröffentlichungstag der Anmeldung: 06.05.1992
(73) Patentinhaber: CRM S.p.A., I-20073 Codogno, Milano (IT)
(72) Erfinder: Cigolini, Aldo, I-20070 Fombio (IT)
(74) Vertreter: Manitz, Gerhart, Dipl.-Phys. Dr.

(56) Entgegenhaltungen:
- CH-A- 405 196
- CH-A- 586 031
- DE-A- 3 333 026
- DE-C- 3 521 982
- DE-U- 8 912 150
- FR-E- 94 172
- US-A- 1 511 452
- US-A- 4 656 840

## Beschreibung

Die Erfindung betrifft eine Vorrichtung zur gleichzeitigen Erzeugung und Abgabe von mit Luft emulgierten Flüssigkeiten oder Cremes, insbesondere Schlagsahne aus Flüssigkeiten bzw. Cremes, insbesondere Flüssigsahne nach dem Oberbegriff des Patentanspruchs 1.

Bekannte Vorrichtungen dieser Art (DE-A-19 65 852, CH-A-405 196, DE-U-90 02 684) weisen einen Außenkasten und eine darin angeordnete isolierte Aufnahmewanne auf. Im Innern der Aufnahmewanne sind hauptsächlich ein die zu schlagende Flüssigsahne enthaltender Flüssigsahnebehälter und eine Pumpe zum Ansaugen und Abgeben der Sahne sowie zur Vermischung mit Luft vorgesehen. Die mit Luft vermischte Sahne wird dann durch die Pumpe in das Umwandlungsorgan, welches auch als Schlagkamm bezeichnet wird, gedrückt, wobei die geschlagene Sahne gebildet wird.

Außerhalb der isolierten Aufnahmewanne sind in dem Außenkasten der Pumpenmotor sowie die Kompressoren für die Kühlmittel, Kondensatoren, Ventilatoren etc. oder thermoelektrische Elemente untergebracht.

Derartige Vorrichtungen müssen im Flüssigsahnebehälter eine Kühltemperatur von wenigen °C aufrechterhalten, um einerseits die Sahne zu konservieren und andererseits das Schlagen der Sahne zu begünstigen. Wichtig ist weiter, daß auch die Ansaug- und Abgaberohre sowie die Pumpe auf einer Kühltemperatur von wenigen °C gehalten werden, da das Schlagen der Sahne durch Vermischung mit Luft und Komprimieren im Umwandlungsorgan mit kühler Sahne in einer gekühlten Umgebung besser vor sich geht.

Problematisch bei den bekannten Vorrichtungen zur Erzeugung von Schlagsahne aus Flüssigsahne ist, daß sie wegen des Erfordernisses besonderer Kälteerzeugungsvorrichtungen sehr aufwendig in der Herstellung und im Betrieb sind.

Zur Vermeidung aufwendiger Kälteerzeugungsvorrichtungen hat man bei Eisherstellungsgeräten schon Kältepatronen bzw. Kälteakkumulatoren verwendet, die zuvor in einem Tiefkühlschrank auf sehr niedrige Temperaturen von z. B. -18°C abgekühlt und dann in dem Eisherstellungsgerät angeordnet werden, wo sie dann beim Betrieb des Gerätes für das Gefrieren der zunächst flüssigen Eismischung sorgen (DE-A-28 31 592, EP-A-0 206 428, DE-A-38 06 508, DE-C-34 22 163). Die Anwendung dieser Kühlanordnungen bei Schlagsahneherstellungsvorrichtungen ist deswegen problematisch, weil die Flüssigsahne weder innerhalb des Flüssigsahnebehälters noch bei ihrem Transport bis zum Ausgabeorgan gefrieren darf, denn dadurch würde die Vorrichtung funktionsunfähig.

Die Verwendung von tiefgekühlten Kältepatronen zur Kühlung von Flüssigkeiten oder anderen Substanzen ist auch sonst schon vielfach im Stand der Technik bekanntgeworden (US-A-44 83 157; US-A-46 08 837; DE-GBM-88 02 256; DE-A-28 19 884). Hierbei kommt es aber entweder zum teilweisen Gefrieren des zu kühlenden Gutes oder die volumenmäßige Kältekapazität ist so gering, daß die Kühlung nicht lange genug aufrechterhalten werden kann.

Weiter hat man bei einer Schlagsahneherstellungsvorrichtung (DE-A-808 909) bereits einen Sahneauspresskolben mit einer Eisfüllung versehen, um die geschlagene Sahne kühl zu halten. Auch durch diese Maßnahme kann eine ausreichend lange Kühlung nicht aufrechterhalten werden, da das Kolbenvolumen begrenzt und die Temperatur des Eises nicht niedrig genug ist.

Um die Herstellungskosten und den Platzbedarf einer Maschine zur Erzeugung von Schlagsahne herabzusetzen, hat man diese auch schon in zwei voneinander lösbare Einheiten unterteilt (CH-A-586 031), von denen die erste Einheit den Sahnebehälter, die Pumpe und die Homogenisierungseinrichtung und die zweite Einheit den Antriebsmotor enthält. Dabei ist die Welle der Pumpe mit der Welle des Motors durch eine steckbare Wellenkupplung verbunden. Auf diese Weise wird es möglich, die erste Einheit von der zweiten abzuheben und im Kühlschrank aufzubewahren. Zur Erzeugung von Schlagsahne wird die erste Einheit aus dem Kühlschrank herausgenommen, auf die zweite Einheit aufgesteckt und betrieben.

Bei dieser bekannten Maschine wird zwar auch ein Kühlaggregat vermieden, doch ist ein einwandfreier Betrieb nur solange gewährleistet, wie die vorgekühlte Sahne in der Maschine kühl bleibt. Diese Zeit ist selbst bei guter Isolierung für einen wirtschaftlichen Betrieb einer Schlagsahneherstellungsmaschine beispielsweise in einem Restaurant, einer Eisdiele oder einem Café viel zu kurz. Außerdem ist die Handhabung sehr aufwendig, weil die Maschine ständig in ihre beiden Einzelbestandteile zerlegt und wieder zusammengesetzt werden muß. Auf diese Weise ist auch ein Dauerbetrieb nicht aufrechtzuerhalten.

Das grundlegende Problem bei der Kühlhaltung von Sahne in einer ohne Kühlaggregat arbeitenden Schlagsahneherstellungsvorrichtung besteht darin, daß einerseits die Temperatur der Sahne niemals unter den Gefrierpunkt sinken darf, während aber andererseits die Kühlhaltung über einen längeren Zeitraum gewährleistet werden muß, damit einerseits die Flüssigsahne konserviert wird und andererseits eine optimale Funktion für eine längere Zeit gewährleistet ist, d.h. ein wirtschaftlicher Betrieb möglich ist. Außerdem muß die Handhabung einfach und schnell möglich sein. Aus hygienischen Gründen soll weiter eine schnelle und gute Reinigung erfolgen können.

Das Ziel der Erfindung besteht darin, eine Vorrichtung zur gleichzeitigen Erzeugung und Abgabe von Schlagsahne und dergleichen aus Flüssigsahne und dergleichen nach dem Oberbegriff des Patentanspruchs 1 zu schaffen, bei der ohne die Verwendung von kälteerzeugenden Kühlaggregaten, d. h. mit einfachsten Mitteln, eine gleichmäßige und lang andauernde Kühlung der flüssigen und der geschlagenen Flüssigkeit sowie der mit ihr in Berührung kommenden Bauteile auf wenige °C über dem Gefrierpunkt liegende Temperaturen gewährleistet ist, d. h., daß ein teilweises Gefrieren der Flüssigkeit, insbesondere Sahne weitgehend vermieden wird, gleichwohl aber ein Langzeitbetrieb möglich ist.

Zur Lösung dieser Aufgabe sind die Merkmale des kennzeichnenden Teils des Patentanspruchs 1 vorgesehen.

Erfindungsgemäß wird durch Verwendung von tiefgekühlten Kühlelementen, die einen wesentlichen Bruchteil des Innenraums der Aufnahmewanne einnehmen, einerseits eine für eine länger andauernde Kühlung wichtige hohe Kältekapazität bereitgestellt, andererseits jedoch durch geeignete räumliche Anordnung der Kühlelemente und der Funktionselemente sowie den allenfalls punktuell oder kleinflächig überbrückten Luftspalt dafür gesorgt, daß der Kälteübergang von den Kühlelementen auf die Funktionselemente, insbesondere den Flüssigkeitsaufnahme-, insbesondere -sahnebehälter so verzögert und verlangsamt vor sich geht, daß es an keiner Stelle und zu keinem Zeitpunkt während des Betriebs zu einem Gefrieren von Flüssigkeit, insbesondere Sahne kommt. Die Kühlelemente sollen dabei vorzugsweise auf Temperaturen zwischen -10°C und -30° C, insbesondere -15°C und -25°C und vorzugsweise etwa -20°C gekühlt werden.

Vorteilhafte Weiterbildungen der Erfindung sind durch die Unteransprüche gekennzeichnet.

Eine besonders vorteilhafte und platzsparende Unterbringung der Kühlelemente ist durch die Formgebung nach Anspruch 3 gewährleistet. Die Kühlelemente haben also die Form von rechteckigen Platten, die in enger Packung in der Aufnahmewanne untergebracht werden können. Die Aufteilung der Kühlelemente in zahlreiche einzelne Kühlplatten hat dabei den Vorteil, daß die Kälte über die vorzugsweise aus Kunststoff bestehende Umhüllung jedes Kühlelementes nur sehr verzögert an die umgebende Luft abgegeben wird. Hierdurch wird also der Zielsetzung der Erfindung, und zwar eine hohe Kältekapazität bereitzustellen, die Kälte aber nur langsam an die Umgebung abzugeben, wesentlich gefördert. Auch die Handhabung, d.h. insbesondere die schnelle Auswechslung der Kühlelemente wird durch diese Ausbildung erleichtert.

Besonders vorteilhaft ist es, wenn gemäß Anspruch 5 die tiefgekühlten Kühlelemente in einem besonderen, vom Funktionsbereich separierten Kühlmittelbereich massiert werden; in diesem Bereich können dann über längere Zeit weit unter dem Gefrierpunkt liegende Temperaturen aufrechterhalten werden, ohne daß die im abgetrennten Funktionsbereich befindlichen und mit flüssiger oder geschlagener Flüssigkeit, insbesondere Sahne in Berührung stehenden Elemente auf Temperaturen unterhalb des Gefrierpunktes abgekühlt werden.

Um einerseits eine möglichst langzeitige Kühlung zu erhalten, andererseits aber ein Gefrieren der Flüssigkeit oder Emulsion an irgendwelchen Stellen sicher zu vermeiden, soll zweckmäßigerweise das Volumenverhältnis nach Anspruch 10 eingehalten werden. Auf diese Weise kann ein Betrieb während eines normalen Arbeitstages ohne Auswechslung von Kühlelementen gewährleistet werden.

Wenn die erfindungsgemäß verwendeten Kühlelemente nach einem Betrieb der Emulsions-, insbesondere Schlagsahnemaschine während eines Tages verbraucht sein sollten, können sie z.B. am nächsten Morgen durch einen frischen tiefgekühlten Satz von Kühlelementen ausgewechselt werden, wobei etwa noch vorhandene Flüssigkeit, insbesondere Sahne über Nacht in einem Kühlschrank aufbewahrt werden sollte.

Die Erfindung wird im folgenden anhand der Zeichnungen näher beschrieben; in diesen zeigen:
- Fig. 1: eine Seitenansicht einer Vorrichtung zur Sahneerzeugung und -abgabe gemäß der Erfindung,
- Fig. 2: einen schematischen Schnitt nach Linie II-II in Fig. 1, wobei auch Bauelemente vor der Schnittebene schematisch angedeutet sind,
- Fig. 3: eine Draufsicht auf die Vorrichtung der Fig. 1 bei abgenommenem Deckel, in etwas größerem Maßstab,
- Fig. 4: eine zu Fig. 3 analoge schematische Draufsicht einer weiteren Ausführungsform zur Doppelsahneerzeugung und -abgabe bei abgenommenem Deckel und
- Fig. 5: einen schematischen Schnitt nach Linie V-V in Fig. 4.

Nach der Zeichnung weist die erfindungsgemäße Vorrichtung einen Außenkasten 11 auf, in den eine Aufnahmewanne 13 eingesetzt ist, die außen von Isoliermaterial 12 umgeben ist. In der Aufnahmewanne 13 sind ein Flüssigkeitsaufnahmebehälter, hier ein Flüssigsahnebehälter 15, eine Pumpe 17 und ein längliches Umwandlungsorgan 21 in Rohrform angeordnet, welches aus einem Außenrohr und einem darin angeordneten Emulgierungszylinder besteht.

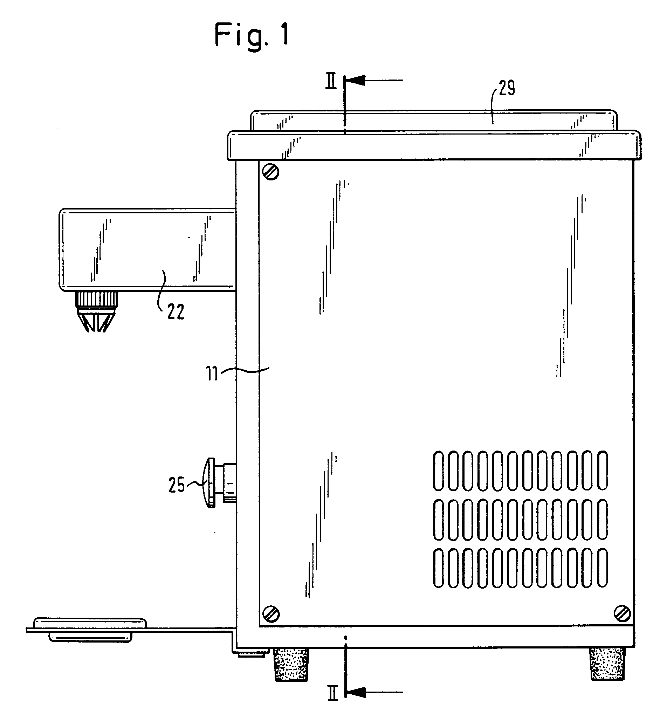

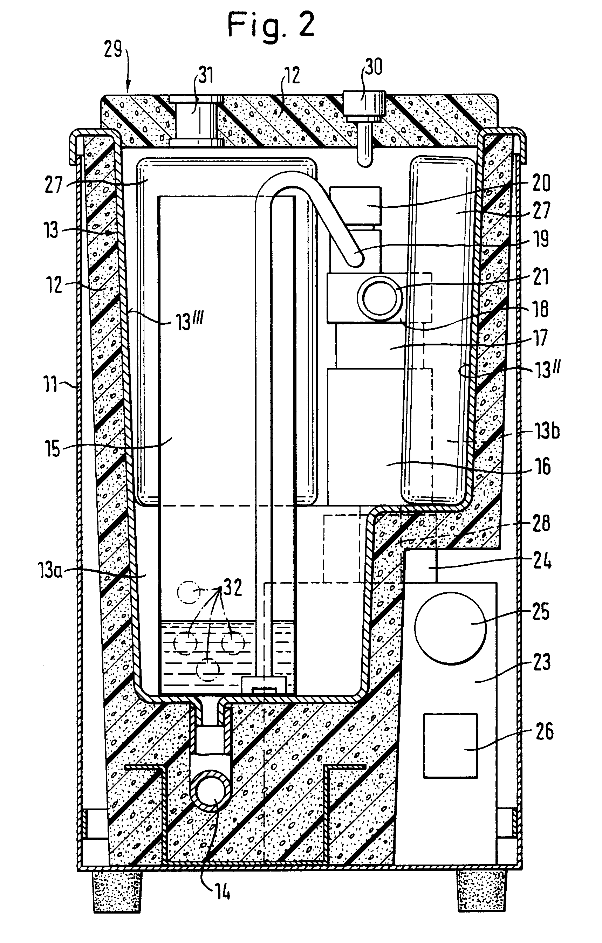

Die Aufnahmewanne 13 ist so geformt, daß sie einen Teil 13a mit größerer Tiefe von Quaderform und einen breiteren Teil 13b von geringerer Tiefe aufweist. Der Teil 13a mit größerer Tiefe kann am Boden mit einem Ablaßrohr 14 versehen sein und nimmt beim Ausführungsbeispiel nach Fig. 1 bis 3 den Flüssigsahnebehälter 15 auf. In dem Flüssigsahnebehälter 15 können mit einer in Flüssigsahne nicht lösbaren Hülle umgebene Kühlmittel, wie eutektische Kühlakkumulatorkugeln 32 vorgesehen sein, die in Fig. 2 strichpunktiert angedeutet sind und zwecks Vorkühlung leicht herausgenommen werden können. Die Kühlakkumulatorkugeln 32 werden vor dem Einbringen in den Flüssigsahnebehälter 15 tiefgekühlt. Ihr Volumen im Vergleich zum Gesamtvolumen der Flüssigsahne soll so sein, daß nach einem Temperaturausgleich zwischen den Kühlakkumulatorkugeln 32 und der im Flüssigsahnebehälter 15 enthaltenen Flüssigsahne deren Temperatur noch einige °C über dem Gefrierpunkt liegt. Die Kühlakkumulatorkugeln 32 werden zweckmäßigerweise nur dann verwendet, wenn die Sahne nicht vorgekühlt werden kann.

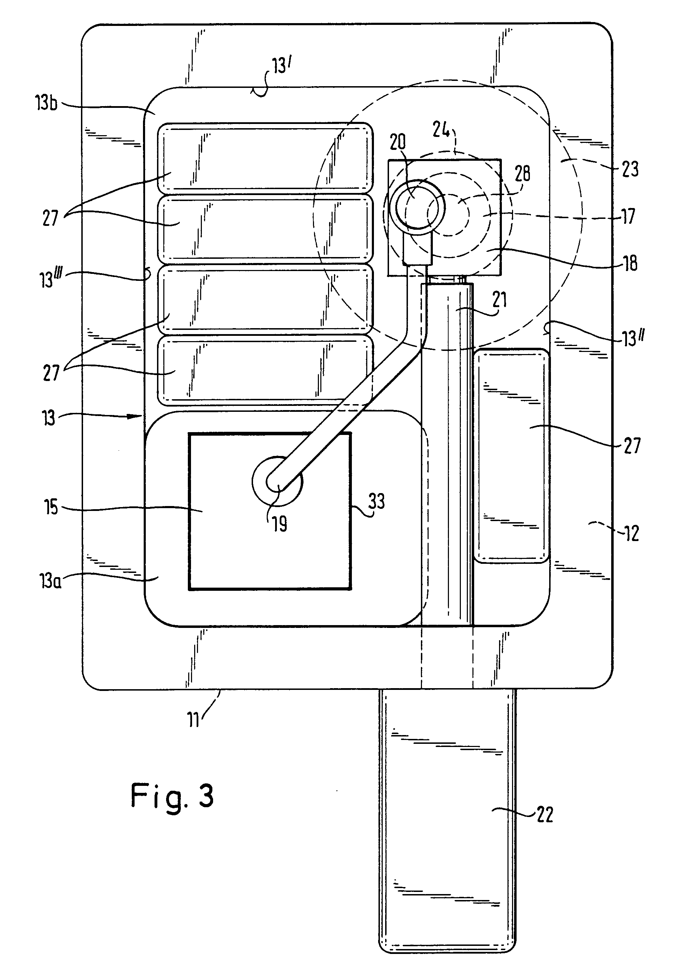

In dem breiteren und flacheren Teil 13b der Aufnahmewanne 13 ist ein Sockel 16 für eine Pumpe 17 angeordnet, die an ihren Deckel 18 mit einem vorzugsweise flexiblen Ansaugrohr 19 versehen ist, welches sich in den Flüssigsahnebehälter 15 erstreckt, um die dort vorhandene Flüssigsahne anzusaugen. Weiter ist am Deckel 18 der Pumpe 17 ein Luftbeimischregulator 20 und das Umwandlungsorgan 21 vorgesehen, das sich nach Fig. 3 quer durch den Innenraum der Aufnahmewanne 13 erstreckt und mit einem äußeren Ausgabeorgan 22 verbunden ist. Für das Umwandlungsorgan 21 bzw. dessen äußeres Verbindungsrohr ist in der vorderen Wand der Aufnahmewanne 13, dem Isoliermaterial 12 und dem Außenkasten 11 eine geeignet dimensionierte Bohrung vorgesehen. Im Umwandlungsorgan 21 wird die Flüssigsahne unter Druck mit Luft gemischt und dabei in Schlagsahne umgewandelt.

Unterhalb des Sockels 16 der Pumpe 17 ist außerhalb des Isoliermaterials 12 ein Elektromotor 23 vorgesehen, der durch ein die Antriebswelle 28 enthaltendes Lagerorgan 24 mit dem Sockel 16 verbunden ist. Für das Lagerorgan 24 und die Welle 28 sind in der Wand der Aufnahmewanne 13 und dem Isoliermaterial 12 geeignet dimensionierte Bohrungen vorgesehen.

Mittels eines von außen zugänglichen Hauptschalters 26 und eines Steuerimpulsgebers 25 kann das Gerät eingeschaltet bzw. die Sahneausgabe gesteuert werden. Für die Unterbringung des Elektromotors 23 sowie der ihm zugeordneten Organe und Kabel ist der Bereich unterhalb des weniger tiefen Teils 13b der Aufnahmewanne 13 vorgesehen.

Erfindungsgemäß sind in dem Teil 13b mit geringerer Tiefe leicht und schnell herausnehmbare Kühlakkumulatoren 27 vorgesehen, welche Abmessungen von etwa 175 x 95 x 40 mm aufweisen und aus einer Kunststoffhülle mit gelförmigem Inhalt bestehen.

Nach Fig. 3 sind die quader- bzw. plattenförmigen Kühlakkumulatoren 27 längs zweier Wände 13', 13''' der Aufnahmewanne 13 angeordnet. Die Akkumulatoren 17 können eutektische Platten oder Trockeneis-Behälter sein, wobei stets eine Tiefkühlung der Kühlelemente vorgesehen sein muß, um eine ausreichende Kühlkapazität zur Verfügung zu haben.

Das Umwandlungsorgan 21 ist von üblicher Art und weist beispielsweise einen Labyrinth-Durchgang auf, der mit dem äußeren Ausgabeorgan 22 verbunden ist, welches beispielsweise als ein isoliertes Ausgabeventil ausgebildet sein kann.

Oben ist der Außenkasten 11 durch einen Deckel 29 verschlossen, der isolierend ausgebildet ist oder Isoliermaterial 12 enthält. Am Deckel 29 können ein nicht gezeigter Handgriff sowie ein Temperaturanzeiger 30 und/oder ein Anzeigemittel 31 für den Stand der flüssigen Sahne angeordnet sein.

Fig. 3 zeigt die erfindungsgemäße Anordnung der verschiedenen Elemente der erfindungsgemäßen Vorrichtung besonders anschaulich. Man erkennt, daß der Flüssigsahnebehälter 15 und der Teil 13a mit größerer Tiefe in einer Ecke des Außenkastens 11 liegen, während der Motor 23 und die Pumpe 17 in der diagonal gegenüberliegenden Ecke untergebracht sind.

Die Kühlakkumulatoren 27 sind hinter dem Flüssigsahnebehälter 15 angeordnet und erstrecken sich bis zur hinteren linken Ecke; sie garantieren eine angemessene Kühlung aller mit Sahne in Berührung kommenden Bauelemente.

Vorzugsweise wird das Volumen aller Kühlelemente im Verhältnis zum Gesamtvolumen der Aufnahmewanne 13 zwischen 0,3 und 0,4, insbesondere etwa ein Drittel gewählt.

Die Kühlelemente der erfindungsgemäßen Vorrichtung sollen auf Temperaturen zwischen -10°C und -30°C, vorzugsweise -15°C bis -25°C und insbesondere etwa -20°C tiefgekühlt werden, wodurch einerseits eine erhebliche Kühlkapazität bereitgestellt wird, andererseits aber im Zusammenhang mit der speziellen Anordnung der erfindungsgemäßen Elemente gewährleistet wird, daß die Temperatur der Sahne an keiner Stelle einen geringeren Wert als 1°C annimmt.

Besonders wichtig ist die Unterteilung der Aufnahmewanne 13 in zwei Teile 13a, 13b, von denen der eine (13a) tiefer ist und den unteren Teil des Flüssigsahnebehälters 15 aufnimmt, der andere (13b) flacher, aber flächenmäßig größer ist. Auf diese Weise wird eine zu starke Kühlung der Sahne wirksam verhindert, und es wird gleichzeitig ermöglicht, daß handelsübliche höhere Sahnebehälter in Quaderform in der Aufnahmewanne 13 untergebracht werden können.

Grundsätzlich ist es erfindungsgemäß auch möglich, in einer einzigen Aufnahmewanne mehrere Pumpen und Umwandlungsrohre mit zugehörigen äußeren Ausgabeorganen sowie darunter mehrere Motoren anzuordnen. In diesem Fall können mehrere Sahnesorten mit verschiedener Farbe, verschiedenem Geschmack, verschiedenem Aroma etc. ausgegeben werden.

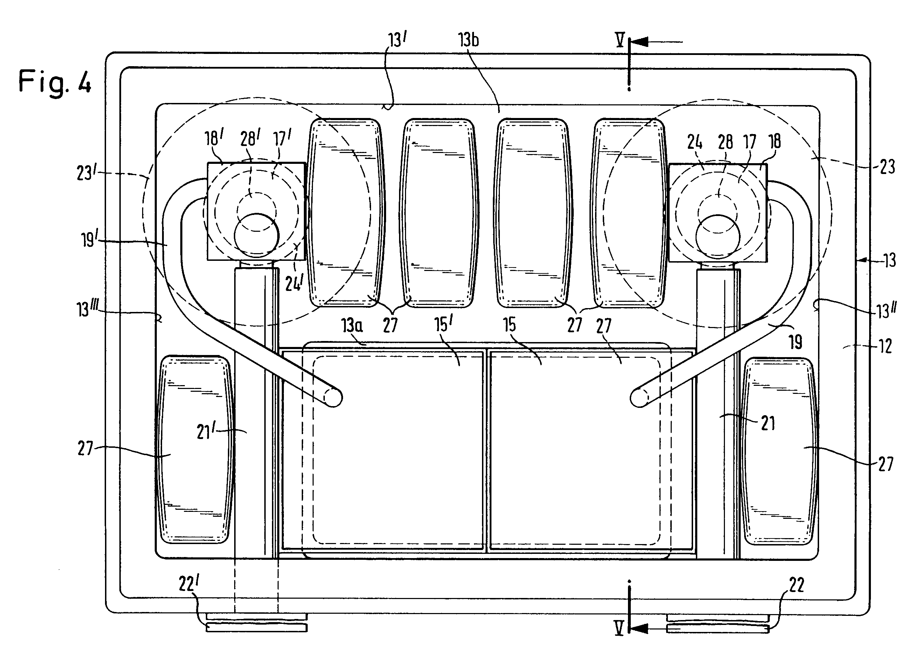

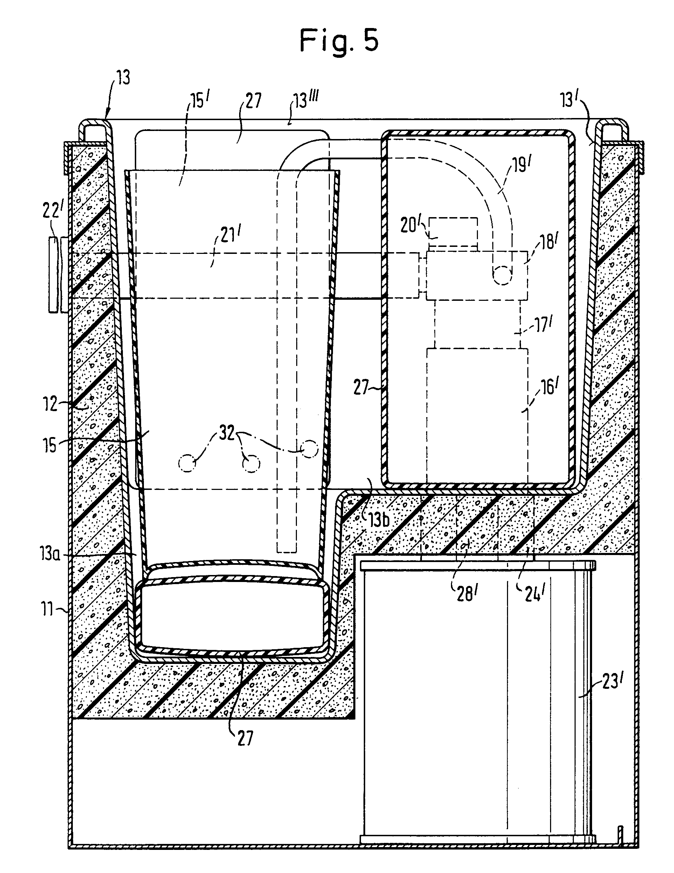

Die Fig. 4 und 5 zeigen eine Vorrichtung zur Erzeugung und Abgabe von zwei Sahnesorten. Gleiche Bezugszahlen bezeichnen dabei entsprechende Bauteile wie in den Fig. 1 bis 3. Die Bezugszahlen der für die zweite Sahnesorte vorgesehenen Bauelemente sind zusätzlich mit einem Strich (') versehen.

Die Motoren 23, 23', die darüberliegenden Pumpen 17, 17' und die sich nach vorne erstreckenden Umwandlungsorgane 21, 21' mit den Ausgabeorganen 22, 22' sind nach Fig. 4 symmetrisch auf beiden Seiten der rechteckigen Aufnahmewanne 13 vorgesehen. Im hinteren Bereich sind zwischen den Pumpen 17, 17' vier flache quaderförmige Kühlakkumulatoren 27 angeordnet, welche nur an die hintere Wand 13' der Aufnahmewanne 13 angrenzen.

Zwei weitere Kühlakkumulatoren 27 befinden sich zwischen der rechten bzw. linken Wand 13'' bzw. 13''' der Aufnahmewanne 13 und den Umwandlungsorganen 21, 21'. Schließlich ist ein Kühlakkumulator 27 in dem entsprechend länglich ausgebildeten vertieften Teil 13a der Aufnahmewanne 13 flach angeordnet, wobei jedoch ein flächiger Kontakt mit dem Boden der beiden darüber angeordneten Flüssigsahnebehälter 15, 15' vermieden ist, indem nur die Ränder des Bodens in Kontakt mit der Oberfläche des darunter befindlichen Kühlakkumulators 27 stehen. Wesentlich ist, daß die Flüssigsahnebehälter 15, 15' mit ihrem unteren Teil sich noch zumindest in der oberen Hälfte des tieferen Teils 13a befinden.

Die Arbeitsweise der erfindungsgemäßen Vorrichtung zur Sahneerzeugung und -abgabe ist wie folgt:
Zunächst werden die Kühlakkumulatoren 27 beispielsweise in einem Tiefkühlschrank auf eine Temperatur von -23°C abgekühlt. Dann wird Flüssigksahne in den Flüssigsahnebehälter 15 eingefüllt.

Anschließend werden dann der Flüssigsahnebehälter 15 bzw. 15' und die Kühlakkumulatoren 27 in der Anordnung nach Fig. 3 oder 4, 5 in die Aufnahmewanne 13 der erfindungsgemäßen Vorrichtung eingesetzt, wobei die Ansaugrohre 19, 19' in die Flüssigsahne eingetaucht werden, zum Schluß wird der Deckel 29 aufgebracht.

Nun ist die Vorrichtung nach dem Anschließen an das Stromnetz betriebsfähig und durch Einschalten des Hauptschalters 26 und Betätigen des Knopfes 25 können Sahneportionen in der gewünschten Menge ausgegeben werden. Durch die Kühlakkumulatoren 27 wird nicht nur die Sahne in den Flüssigsahnebehältern 15, 15' auf der gewünschten niedrigen Temperatur oberhalb des Gefrierpunktes gehalten, sondern es werden auch die übrigen mit der Sahne in Berührung kommenden Elemente, wie das Ansaugrohr 19, die Pumpe 17 und das Umwandlungsorgan 21 auf einer niedrigen Temperatur oberhalb des Gefrierpunktes gehalten. Hierzu tragen auch die in Fig. 3 rechts und in Fig. 4 rechts und links unten dargestellten Kühlelemente 27 bei, welche nur tangential am Umwandlungsorgan 21 bzw. 21' anliegen und für einen stark gebremsten Kälteübergang auf das Umwandlungsorgan 21 sorgen, derart, daß die im Umwandlungsorgan 21 befindliche Schlagsahne nicht gefrieren kann.

Wenn die Kühlpatronen auf -23°C abgekühlt werden und Flüssigsahne aus einem Kühlschrank verwendet wird, gelingt es, mit den gezeigten und beschriebenen Ausführungen die Flüssigsahne während eines normalen Arbeitstages, d.h. etwa 12 Stunden auf der optimalen Verarbeitungstemperatur zu halten. Die Vorrichtung kann also ohne Auswechslung der Kühlakkumulatoren 27 gut einen Tag lang betrieben werden.

## Patentansprüche

1. Vorrichtung zur gleichzeitigen Erzeugung und Abgabe von Schlagsahne oder ähnlichen mit Luft emulgierten Flüssigkeiten oder Cremes aus Flüssigsahne bzw. ähnlichen mit Luft emulgierbaren Flüssigkeiten oder Cremes mit einem Außenkasten (11), in dem vorzugsweise unten wenigstens ein Motor (23, 23') und zweckmäßigerweise zumindest teilweise darüber eine von Wärmeisoliermaterial (12) umgebene, oben durch einen wärmeisolierenden Deckel (29) abgeschlossene, innen Kühlmittel (27) aufweisende Aufnahmewanne (13) mit vorzugsweise rechteckförmigem Horizontalquerschnitt untergebracht sind, wobei sich die Antriebswelle(n) (28) des Motors (23) bzw. der Motoren (23, 23') durch wenigstens eine Bohrung im Isoliermaterial (12) und der Aufnahmewanne (13) zu wenigstens einer im Inneren der Aufnahmewanne (13) angeordneten Sahnepumpe (17, 17') erstreckt, deren Saugseite mit einem Luftbeimischregulator (20, 20') und einem Flüssigkeitsansaugrohr (19, 19'), das in einen in der Aufnahmewanne (13) angeordneten Flüssigkeitsaufnahmebehälter (15, 15') führt, und deren Druckseite mit einem sich durch das Innere der Aufnahmewanne (13) und eine Bohrung in einer Wand der Aufnahmewanne (13), des Isoliermaterials (12) und des Außenkastens (11) zu einem außen am Außenkasten (11) angeordneten Ausgabeorgan (22, 22') erstreckenden länglichen Umwandlungsorgan (21, 21') verbunden ist, in welchem die angesaugte Luft und Flüssigkeit, insbesondere Flüssigsahne emulgiert werden,
**dadurch gekennzeichnet**, daß
das Kühlmittel bildende, tiefgekühlte Kühlelemente (27) in der Aufnahmewanne (13) leicht und schnell herausnehmbar angeordnet sind und einen wesentlichen Bruchteil des Gesamtvolumens der Aufnahmewanne (13) einnehmen und daß zwischen den Kühlelementen (27) und der zu kühlenden Seite des Flüssigkeitsaufnahmebehälters (15,15'), der Pumpe (17, 17') und dem Umwandlungsorgan (21, 21') sich ein Luftspalt befindet und höchstens eine punktuelle oder kleinflächige Berührung vorliegt, derart, daß die Sahne nur auf eine noch über der Gefriertemperatur liegende Temperatur gekühlt wird.

2. Vorrichtung nach Anspruch 1,
dadurch **gekennzeichnet,**
daß die Kühlelemente einfrierbare Kühlakkumulatoren (27) und/oder eutektische Platten und/oder Trockeneisstücke sind.

3. Vorrichtung nach Anspruch 1 oder 2,
dadurch **gekennzeichnet,**
daß die Kühlelemente die Form eines flachen Quaders haben.

4. Vorrichtung nach Anspruch 3,
dadurch **gekennzeichnet,**
daß die Kühlelemente eine wärmeisolierende Kunststoffhülle und einen eine hohe Kältespeicherkapazität besitzenden, insbesondere gelförmigen Inhalt aufweisen.

5. Vorrichtung nach einem der vorhergehenden Ansprüche,
dadurch **gekennzeichnet,**
daß der Innenraum der Aufnahmewanne (13) in einen Kühlmittelbereich, wo zumindest der größere Teil der Kühlelemente (27) konzentriert ist, und in einen Funktionsbereich zur Unterbringung der Pumpe (17, 17'), des Flüssigkeitsaufnahmebehälters (15, 15') und des Umwandlungsorganes (21, 21') unterteilt ist.

6. Vorrichtung nach Anspruch 5,
dadurch **gekennzeichnet,**
daß der Kühlmittelbereich an wenigstens eine Wand (13'), insbesondere eine oder zwei Wände (13'; 13'', 13''') der Aufnahmewanne (13) angrenzt und daß vorzugsweise zusätzlich lediglich vereinzelte Kühlelemente (27) im Funktionsbereich, z.B. an einer Seite des Umwandlungsorganes (21, 21') und/oder der Pumpe (17, 17') angeordnet sind.

7. Vorrichtung nach Anspruch 5 oder 6,
dadurch **gekennzeichnet,**
daß der Flüssigkeitsaufnahmebehälter (15) in einer Ecke der Aufnahmewanne (13) angeordnet ist und vorzugsweise das Umwandlungsorgan (21) an der freien Wand (33) des Flüssigkeitsaufnahmebehälters (15) entlanggeführt ist und/oder daß der Flüssigkeitsaufnahmebehälter (15) und der Kühlmittelbereich im wesentlichen die eine Hälfte des Innenraums der Aufnahmewanne einnehmen, die Pumpe (17) und das Umwandlungsorgan (21) sowie evtl. vereinzelte weitere Kühlelemente (27) im wesentlichen die andere Hälfte.

8. Vorrichtung nach einem der vorhergehenden Ansprüche,
dadurch **gekennzeichnet,**
daß die Aufnahmewanne (13) in einen Bereich (13b) mit kleinerer Tiefe, wo die Kühlelemente (27) angeordnet sind, und wenigstens einen Bereich (13a) mit größerer Tiefe, in dem der bzw. die Flüssigkeitsaufnahmebehälter (15, 15') und/oder ein oder mehrere Kühlelemente (22) angeordnet sind, unterteilt ist.

9. Vorrichtung nach Anspruch 8,
dadurch **gekennzeichnet,**
daß der bzw. die Bereiche (13a) mit größerer Tiefe quaderförmig ausgebildet sind, und daß der Bereich (13a) bzw. die Bereiche größerer Tiefe sich insbesondere neben dem bzw. dem unterhalb des Bereiches (13b) kleinerer Tiefe befindlichen Motoren (23, 23') befinden.

10. Vorrichtung nach einem der vorhergehenden Ansprüche,
dadurch **gekennzeichnet,**
daß der wesentliche Bruchteil, den die Kühlelemente vom Gesamtvolumen der Aufnahmewanne einnehmen, zwischen 0,3 und 0,4 und insbesondere bei etwa einem Drittel liegt.

## Claims

1. Apparatus for simultaneously producing and dispensing whipping cream or similar air-emulsified liquids, as well creams made of liquid cream or similar air-emulsifiable liquids or creams, said apparatus comprising an outer box (11) in which at least one motor (23, 23') is accommodated, preferably low down, and in which a holding tub (13) preferably of rectangular horizontal cross-section is also accommodated, preferably at least partially over said at least one motor, the holding tub (13) having cooling means (27) inside it and being cladded by thermal insulation material (12) and closed off upwardly by a thermally insulating cover (29), wherein the drive shaft(s) (28) of the motor (23) or the motors (23, 23') extend through at least one bore in the insulation material (12) and the holding tub (13) to an at least one cream pump (17, 17') arranged inside the holding tub (13), with the suction side of the cream pump being connected to an air admixing regulator (20, 20') and a liquid suction pipe (19, 19') leading to a liquid holding container (15, 15') arranged in the holding tub (13), and the pressure side of the cream pump being connected to an elongate conversion member (21, 21') through the inside of the holding tub (13) and a bore extending through a wall of the holding tub (13), of the insulation material (12) and of the outer box (11) to a dispenser (22, 22') arranged on the outside of the outer box (11), wherein the sucked through air and liquid, in particular liquid cream, is emulsified in the conversion member (21, 21'), **characterised in that** the refrigerated
cooler elements (27) in the holding tub (13) forming the cooling means are arranged so as to be simply and rapidly removable and take up a substantial part of the total volume of the holding tub (13), and in that an air gap exists between the cooler elements (27) and the side of the liquid holding container (15, 15') to be cooled, the pump (17, 17') and the conversion member (21, 21') and that, at the most, a point contact or a small area contact is present such that the cream is only cooled to a temperature lying above the freezing point temperature.

2. Apparatus in accordance with claim 1, characterised in that the cooler elements are freezable cooler accumulators (27) and/or eutectic plates and/or pieces of dry ice.

3. Apparatus in accordance with claim 1 or 2, characterised in that the cooler elements have the form of flat parallelopipeds.

4. Apparatus in accordance with claim 3, characterised in that the cooler elements comprise a thermally insulating plastic sheath and contain material, in particular in gel form, possessing a large cold storage capacity.

5. Apparatus in accordance with one of the preceding claims, characterised in that the interior volume of the holding tub (13) is subdivided into a cooling means region where at least the greater part of the cooler elements (27) is concentrated and a function region for accommodating the pump (17, 17'), the liquid holding container (15, 15') and the conversion member (21, 21').

6. Apparatus in accordance with claim 5, characterised in that the cooling means region borders on at least one wall (13'), in particular one or two walls (13'; 13'', 13''') of the holding tub (13) and in that preferably additional individual cooler elements (27) are arranged in the function region, for example on a side of the conversion member (21, 21') and/or the pump (17, 17').

7. Apparatus in accordance with claim 5 or 6, characterised in that the liquid holding container (15) is arranged in a corner of the holding tub (13), and preferably the conversion member (21) is guided along the free wall (33) of the liquid holding container (15), and/or in that the liquid holding container (15) and the cooling means region take up substantially one half of the interior volume of the holding tub, whereas the pump (17) and the conversion member (21) as well as, if present, individual further cooler elements (27) take up substantially the other half.

8. Apparatus in accordance with one of the preceding claims, characterised in that the holding tub (13) is subdivided into one region (13b) with a smaller depth where the cooler elements (27) are arranged and at least one region (13a) of larger depth in which the liquid holding container or containers (15, 15') and/or one or more cooler elements (22) are arranged.

9. Apparatus in accordance with claim 8, characterised in that the region or regions (13a) of larger depth are formed in a parallelopiped shape and in that the region or regions (13a) of larger depth are situated in particular alongside the motor or motors (23, 23') situated below the region (13b) of smaller depth.

10. Apparatus in accordance with one of the preceding claims, characterised in that the substantial part of the total volume of the holding tub taken up by the cooler elements amounts to between 0.3 and 0.4 times the total volume and, in particular, amounts to approximately one third.

## Revendications

1. Appareil pour produire et distribuer simultanément de la crème fouettée ou similaire avec des liquides émulsionnés avec de l'air ou des crèmes fouettées liquides ou similaires avec des liquides susceptibles d'être émulsionnés avec de l'air ou des crèmes, comportant un caisson extérieur (11), dans lequel sont logés de préférence en bas au moins un moteur (23, 23') et judicieusement du moins partiellement par dessus une cuve de réception (13), entourée par un matériau thermiquement isolant (12), refermée en haut par un couvercle thermiquement isolant (29) et comportant à l'intérieur un agent réfrigérant (27), qui présente de préférence une section transversale horizontale rectangulaire, le(s) arbre(s) d'entraînement (28) du moteur (23) ou des moteurs (23, 23') s'étendant à travers au moins un perçage dans le matériau thermiquement isolant (12) et dans la cuve de réception (13) jusqu'à au moins une pompe à crème (17, 17') agencée à l'intérieur de la cuve de réception (13), dont le côté aspiration est relié à un régulateur d'admixtion d'air (20, 20') et à un tube d'aspiration de liquide (19, 19') qui mène dans un récipient à liquide (15, 15') agencé dans la cuve de réception (13), et dont le côté refoulement est relié à un organe de transformation (21, 21') oblong s'étendant à travers l'intérieur de la cuve de réception (13) et à travers un perçage dans une paroi de la cuve de réception (13) du matériau thermiquement isolant (12) et du caisson extérieur (11) jusqu'à un organe de distribution (22, 22') agencé à l'extérieur sur le caisson extérieur (11), et dans cet organe de transformation (21, 21') sont émulsionnés l'air et le liquide aspirés, en particulier de la crème liquide,
caractérisé en ce que
des éléments réfrigérateurs (27) congelés formant l'agent réfrigérant sont agencés de façon facilement et rapidement détachable dans la cuve de réception (13), et occupent une proportion essentielle du volume total de la cuve de réception (13), et en ce qu'une fente d'air se trouve entre les éléments réfrigérateurs (27) et le côté à refroidir du récipient à liquide (15, 15'), de la pompe (17, 17') et de l'organe de transformation (21, 21'), et qu'il existe tout au plus un contact ponctuel ou à petite surface, de telle sorte que la crème est refroidie uniquement à une température encore supérieure à la température de congélation.

2. Appareil selon la revendication 1,
caractérisé en ce que les éléments réfrigérateurs sont des accumulateurs de réfrigération (27) susceptibles d'être congelés et/ou des plaques eutectiques et/ou des morceaux de neige carbonique.

3. Appareil selon l'une ou l'autre des revendications 1 et 2,
caractérisé en ce que les éléments réfrigérateurs présentent la forme d'un parallélépipède plat.

4. Appareil selon la revendication 3,
caractérisé en ce que les éléments réfrigérateurs possèdent une enveloppe en matière plastique thermiquement isolante et une forte capacité d'accumulation frigorifique, et présentent en particulier un contenu en forme de gel.

5. Appareil selon l'une quelconque des revendications précédentes,
caractérisé en ce que la chambre intérieure de la cuve de réception (13) est divisée en une région d'agent réfrigérant, dans laquelle du moins la majeure partie des éléments réfrigérateurs (27) est concentrée, et en une région fonctionnelle pour le logement de la pompe (17, 17'), du récipient à liquide (15, 15') et de l'organe de transformation (21, 21').

6. Appareil selon la revendication 5,
caractérisé en ce que la région d'agent réfrigérant jouxte au moins une paroi (13'), en particulier une ou deux parois (13' ; 13'', 13''') de la cuve de réception (13), et en ce que de préférence seuls quelques éléments réfrigérateurs (27) sont agencés en supplément dans la région fonctionnelle, par exemple sur un côté de l'organe de transformation (21, 21') et/ou de la pompe (17, 17').

7. Appareil selon l'une ou l'autre des revendications 5 et 6,
caractérisé en ce que le récipient à liquide (15) est agencé dans un coin de la cuve de réception (13), et l'organe de transformation (21) est guidé de préférence le long de la paroi libre (33) du récipient à liquide (15), et/ou en ce que le récipient à liquide (15) et la région d'agent réfrigérant occupent sensiblement l'une des moitiés de la chambre intérieure de la cuve de réception, la pompe (17) et l'organe de transformation (21) ainsi qu'éventuellement quelques éléments réfrigérateurs supplémentaires (27) occupant sensiblement l'autre moitié.

8. Appareil selon l'une quelconque des revendications précédentes,
caractérisé en ce que la cuve de réception (13) est divisée en une région (13b) ayant une profondeur inférieure, où sont agencés les éléments réfrigérateurs (27), et au moins une région (13a) ayant une profondeur supérieure, où sont agencés le ou les récipients à liquide (15, 15') et/ou un ou plusieurs éléments réfrigérateurs (22).

9. Appareil selon la revendication 8,
caractérisé en ce que la région ou les régions (13a) ayant une profondeur supérieure sont réalisées en forme de parallélépipède, et en ce que la région (13a) ou les régions ayant une profondeur supérieure se trouvent en particulier à côté de la région (13b) ayant une profondeur inférieure ou à côté des moteurs (23, 23') situés au-dessous de celle-ci.

10. Appareil selon l'une quelconque des revendications précédentes,
caractérisé en ce que la proportion essentielle occupée par les éléments réfrigérateurs par rapport au volume total de la cuve de réception, se trouve entre 0,3 et 0,4 et s'élève en particulier à environ un tiers.
